# EUROPEAN PATENT APPLICATION

(11) **EP 2 431 843 A2**
(43) Date of publication of application: **21.03.2012**
(21) Application number: 11181515.5
(22) Date of filing: 15.09.2011
(51) Int. Cl.: G06F 3/033

(54) **Control device**

(30) Priority: 15.09.2010 TW 099217850; 19.11.2010 EP 10191860
(71) Applicant: Liang, Hsu, New Taipei City 242 (TW)
(72) Inventor: Pan, Tian-Fu, New Taipei City, Taiwan (TW); Nien, Chung-Yueh, New Taipei City, Taiwan (TW); Kao, Shiau-Chung, New Taipei City, Taiwan (TW)
(74) Representative: Rees, Simon John Lewis

(57) **Abstract**

A control device for use in a cursor positing device is provided. The control device includes a housing, a control module, a sensing module and a circuit module. The housing defines an accommodation chamber. The control module is positioned on the housing and includes a movable member. The circuit module positioned within the accommodation chamber includes a microprocessor electrically coupled with the sensing module. The sensing module generates a first sensing signal in response to a first displacement variance in case of the first displacement variance achieved by moving the movable member in a major axis direction and transmits the first sensing signal to the microprocessor to reset the cursor to a first reset point.

## Description

### CROSS-REFERENCE TO RELATED APPLICATION

This application is a continuation-in-part of Application No. 12/945,279, filed November 12, 2010, which application is incorporated by reference.

This application claims the foreign priority benefit of Taiwan patent application number 099217850, filed on September 15, 2010.

### BACKGROUND OF THE INVENTION

### 1. Field of the Invention:

The present invention relates to cursor control technology and more particularly, to a control device including a sensing module to sense the action of a movable member by way of no-touch.

### 2. Description of the Related Art:

Following fast development of the modern technology and electronic industry, many different kinds of consumer electronics, such as computer, mobile telephone, digital camera, personal digital assistant, multimedia player and etc., have entered into our daily life. Nowadays, computer has become an important tool and is intensively used by people daily. Further, following the development and popularization of home and office networks, people can use the internet to search information, listen to music, watch movies and TV news, play on-line games, send and receive e-mails, make on-line shopping, on-line subscription and on-line payment.

Further, a computer has multiple functions, bringing convenience to the user. Further, a computer may be equipped with a keyboard and/or mouse for controlling a cursor on a display screen for menu item selection, cursor dragging or other operations.

When operating a computer mouse, a user may rest the wrist of the hand on the desk or a mouse pad and then move the computer mouse or click the button of the computer mouse with the fingers. However, when going to move the computer mouse over a big area, the user must lift the wrist from the desk or mouse pad. Excessive or improper use of a computer may cause pain in the wrist (the so-called carpal tunnel syndrome). In order to eliminate this problem, wrist rests are created. A wrist rest is a device used to support the wrist while typing or when using a computer mouse. However, leaning the wrists on a wrist rest for long periods can put a lot of pressure on the undersides of the wrists. This may cause carpal tunnel syndrome to develop. Actually, a wrist rest does help align the user's hands and wrists while operating. Further, an improperly used wrist rest may actually cause more repetitive stress injuries for those who mouse for extended periods of time.

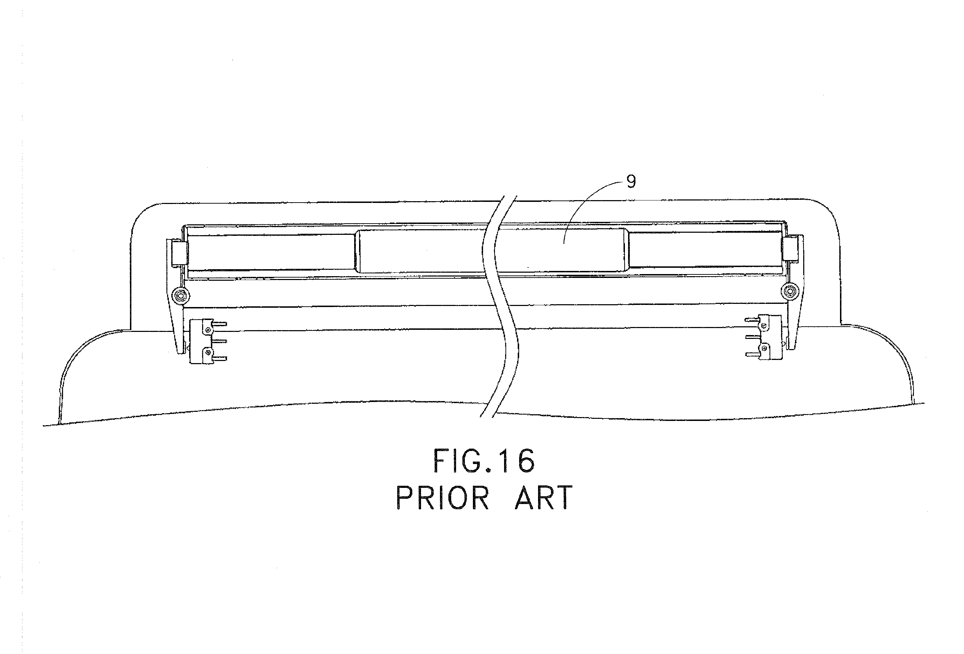

To avoid wrist injury, a wrist pad may be used. However, when operating a mouse, the user may lift the hand from the wrist pad to move the mouse, lowering the practicability of the wrist pad. Therefore, computer manufacturers are trying hard to create orthopedically engineered computers and computer peripheral devices. FIG. 16 illustrates a cursor control device for computer according to the prior art. According to this design, a rolling bar 9 is provided for rotating by the user to control the cursor. However, the rolling bar is not movable axially to trigger a control switch.

An extra swivel member may be used and drivable by the rolling bar to trigger a control switch. However, in actual application, the swivel member may be not accurately driven to trigger the control switch due to user operating habit or insufficient applied force. In this case, the user may have to operate the rolling bar repeatedly. To ensure accurate trigger, the user may have to apply much pressure to the rolling bar in driving the swivel member to trigger the control switch. Frequently operating the control device in this manner may damage the swivel member easily. When the swivel member fails, a repair work will be necessary. Therefore, it is desirable to provide an orthopedically engineered control device that eliminates the aforesaid problems.

### SUMMARY OF THE INVENTION

One object of the present invention provides a control device subject to the use of the magnetic sensing module to sense by way of no-touch the change of the strength of the magnetic field and to generate a corresponding control signal for resetting a cursor, when the change of the strength of the sensed magnetic field is over or achieved to a predetermined value. By way of no-touch sensing, not only the problems on mechanic fatigue or poor contact are prevented, but also the signal may be emitted accurately. Thus, the movable may be made of any suitable hard, soft or flexible material without limitation, such as metal, rubber, plastics, wood, Teflon or cloth.

One object of the present invention, in addition to generate control signal for resetting a cursor back to a reset position, the sensing module is provided for the replacement of detecting module to sense continuous variances of horizontal movement and rotation by a movable member. Accordingly, the sensing module may generate another control signal to render the cursor to move horizontally and vertically.

One object of the present invention provides a control device with a compact size because a comparator, a sensing circuit, latch and output interface are installed to be associated with the use of magnetic sensing module, so as to reduce the whole size of the control device.

Accordingly, a control device for use in a cursor positing device includes a housing, a control module, a sensing module and a circuit module. The housing defines an accommodation chamber and includes a hollow groove connecting the accommodation chamber and exterior of the housing. The control module is positioned on the housing and a portion of the control module is exposed to the hollow groove, wherein the control module comprises a movable member. The sensing module includes a left-side sensing module and a right-side sensing module. The circuit module is positioned within the accommodation chamber and comprises a detecting module facing the movable member and a microprocessor electrically coupled with the detecting module. The left-side sensing module generates a first sensing signal in response to a first displacement variance in case of the first displacement variance achieved by moving the movable member left in a major axis direction and transmits the first sensing signal to the microprocessor, and the right-side sensing module generates a second sensing signal in response to a second displacement variance in case of the second displacement variance achieved by moving the movable member right in the major axis direction and transmits the second sensing signal.

In one embodiment, the control module further comprises a carrier frame accommodated in the hollow grooves and partially extended inside the accommodation chamber. The carrier frame comprises a movable member groove and a through hole. The movable member groove is located at one side of the carrier frame away from the accommodation chamber and is adapted for accommodating the movable member. The through hole beside the carrier frame connects the movable member groove to the accommodation chamber and exposes the detecting module. The detecting module is configured to detect a continuous variance generated by rotation of the movable member or by movement of the movable member in the major axis direction or both rotation and movement of the movable member. The detecting module is located outside the movable member groove.

In one embodiment, the control module further comprise balance bar with one end pivoted onto the housing and another end extended into the accommodation chamber to load against the carrier frame, and the carrier frame further comprises a plurality of elastic members at the other side of the carrier frame.

In one embodiment, the carrier frame further comprises at least one press portion protruded located at the other side thereof, and the circuit module further comprises a control switch electrically coupled with the microprocessor to be against the press portion when a force is applied in downward direction on the carrier frame to make the press portion touch with the control switch.

In one embodiment, the housing further comprises two receiving grooves respectively at left and right sides of the hollow groove to connect to the accommodation chamber. The control module further comprises a carrier frame under the hollow groove and within the accommodation chamber, and the movable member which is located in the hollow groove and upon the carrier frame comprises left and right ends respectively accommodated inside left and right sides of the receiving grooves. The movable member comprises a through hole and a sleeve covering the through hole and surrounding around the movable member and the carrier frame. The detecting module located on the carrier frame is configured to detect at least one of linear movement and rotation motion.

In one embodiment, the circuit module further comprises a connecting interface electrically connected to the microprocessor and electrically connectable to a communication port of an external computer, the connecting interface being selected from the group of USB and PS2.

In one embodiment, the left-side sensing module comprises a left magnet and a left magnetic sensing module correspondingly positioned each other. The right-side sensing module comprises a right magnet and a right magnetic sensing module correspondingly positioned each other. The left and right magnets are mounted to interior or exterior sides of the movable member by one of the fastening techniques of adhesion, snap means and welding or molded together by insert molding. Next, the movable member comprises two magnet holders respectively located on the two distal ends thereof to hold the left and right magnets, respectively.

In one embodiment, the movable member is made in one of the shapes of a cylindrical bar, an oval bar, a rectangular bar and a pentagonal bar.

In one embodiment, the sensing module comprises a comparator with a first and a second inputs and an output terminal. The first input terminal is electrically coupled to an external power source for an electric current input. The second input terminal is electrically coupled to a sensing circuit in the moving path of the movable member. The output terminal is electrically coupled to a latch and the latch is further electrically coupled to an output interface for transmitting signal from the latch to the microprocessor.

In one embodiment, the left-side sensing module comprises a left magnet and a left magnetic sensing module correspondingly positioned each other, and the right-side sensing module comprises a right magnet and a right magnetic sensing module correspondingly positioned each other. Next, the left and right magnets are positioned respectively at distal ends of the movable member, and the left and right magnetic sensing modules are positioned respectively near two sides of said movable member, or the left and right magnetic sensing modules are positioned respectively at the distal ends of said movable member, and the left and right magnets are positioned respectively near the two sides of the movable member.

In one embodiment, the control module further comprises a cover shell, a left push holder and a right push holder positioned respectively at two distal ends of the cover shell, and a sleeve as the movable member movably wearing on the cover shell, and wherein the detecting module is positioned on the cover shell and detects rotation and sliding of the sleeve. Next, the left and right magnets are mounted respectively to the left and right push holders, and the left and right magnetic sensing modules are positioned on the circuit module respectively close to the left and right magnets, or the left and right magnetic sensing modules are mounted respectively to the left and right push holders, and the left and right magnets are positioned on the circuit module respectively close to the left and right magnetic sensing modules.

In one embodiment, the left and right magnetic sensing modules comprise MR (magneto-resistive) sensors, and the MR sensors measure the first and second displacement variances by sensing by way of no-touch the change of the strength of the magnetic field generated by the left and right magnets, and the first and second sensing signals are configured respectively to reset the cursor to a first and a second reset points.

In one embodiment, the left and right magnetic sensing modules comprise Hall integrated circuits facing respectively right magnetic poles of the left and right magnets, and the Hall integrated circuits measure the first and second displacement variances by sensing by way of no-touch the change of the strength of the magnetic field generated by the left and right magnets, and the first and second sensing signals are configured respectively to reset the cursor to a first and a second reset points.

In one embodiment, the left-side sensing module comprises a left optical transmitter and a left optical receiver, and the right-side sensing module comprises a right optical transmitter and a right optical receiver. When achieving the first displacement variance, a portion of the movable member intervenes between the left optical transmitter and a left optical receiver to generate the first sensing signal. When achieving the second displacement variance, a portion of the movable member intervenes between said right optical transmitter and the right optical receiver to generate the second sensing signal, and the first and second sensing signals are configured respectively to reset the cursor to a first and a second reset points.

In one embodiment, the control module further comprises a cover shell, a left push holder and a right push holder positioned respectively at two distal ends of said cover shell, and a sleeve as the movable member movably wearing on the cover shell, and wherein the detecting module is positioned on the cover shell and detects rotation and sliding of the sleeve.

In one embodiment, the sensing module further comprises a plurality of horizontal-moving sensing modules along with the major axis direction to sense continuous variance of horizontal movement achieved by movement of the movable member in the major axis direction and generate a third sensing signal transmitted to the microprocessor.

In one embodiment, the sensing module further comprises a plurality of vertical-moving sensing modules around the movable member to sense continuous variance of rotation achieved by rotation of the movable member and generate a fourth sensing signal transmitted to the microprocessor.

Accordingly, a control device for use in a cursor positing device, comprising: a housing defining an accommodation chamber; a control module positioned on the housing and includes a movable member; a sensing module; and a circuit module positioned within the accommodation chamber and comprising a microprocessor electrically coupled with the sensing module; wherein the sensing module generates a first sensing signal in response to a first displacement variance in case of the first displacement variance achieved by moving the movable member in a major axis direction and transmits the first sensing signal to the microprocessor to reset the cursor to a first reset point.

In one embodiment, the sensing module comprises a magnetic sensing module electrically coupled to the circuit module and a magnet positioned at one of sides at least of the control module, and the magnetic sensing module is a magneto-resistive sensor (MR sensor) to measure the displacement variance of the movable member by sensing by way of no-touch the change of the strength of the magnetic field generated by the magnet.

In one embodiment, the sensing module comprises a magnetic sensing module electrically coupled to the circuit module and a magnet positioned at one of sides at least of the control module, and the magnetic sensing module is a Hall IC faced right a pole of the magnet to measure the displacement variance of the movable member by sensing by way of no-touch the change of the strength of the magnetic field generated by the magnet.

In one embodiment, the sensing module comprises an optical transmitter and an optical receiver both which are positioned at one of sides at least of the control module, when achieving the first displacement variance by moving the movable member in the major axis direction, a portion of the movable member intervenes between the optical transmitter and the optical receiver to prevent the optical receiver from the optical transmitter, and the optical transmitter generates a first sensing signal by way of no-touch in response to block between the optical receiver and the optical transmitter.

In one embodiment, the sensing module comprises a magnetic sensing module electrically coupled to the circuit module and a magnet positioned at one of sides of the control module, and the magnetic sensing module is a magneto-resistive sensor (MR sensor) to measure the first displacement variance of the movable member by sensing by way of no-touch the change of the strength of the magnetic field generated by the magnet.

In one embodiment, the sensing module comprises a magnetic sensing module electrically coupled to the circuit module and a magnet positioned at one of sides at least of the control module, and the magnetic sensing module is a Hall IC faced right a pole of the magnet to measure the first displacement variance of the movable member by sensing by way of no-touch the change of the strength of the magnetic field generated by the magnet.

In one embodiment, the sensing module comprises an optical transmitter and an optical receiver both which are positioned at one of sides at least of the control module, when achieving the first displacement variance by moving the movable member in the major axis direction, a portion of the movable member intervenes between the optical transmitter and the optical receiver to prevent the optical receiver from the optical transmitter, and the optical transmitter generates a first sensing signal by way of no-touch in response to block between the optical receiver and the optical transmitter.

In one embodiment, the sensing module further comprises a plurality of horizontal-moving sensing modules along with the major axis direction and a plurality of vertical-moving sensing modules around the movable member, and wherein the horizontal-moving sensing modules sense by way of no-touch a continuous variance of horizontal movement achieved by movement of the movable member and generate a third sensing signal transmitted to the microprocessor, and the vertical-moving sensing modules sense by way of no-touch the continuous variance of rotation achieved by rotation of the movable member and generate a fourth sensing signal transmitted to the microprocessor.

In one embodiment, the housing further comprises a hollow groove to expose to a portion of the control module on the housing, or the circuit module further comprises a detecting module facing the movable member and electrically coupling with the microprocessor.

In one embodiment, the detecting module detects both continuous variance of rotation achieved by rotating the movable member and continuous variance of movement achieved by moving the movable member toward a horizontal direction in the major axis direction, or detects continuous variance of either rotation achieved by rotating the movable member or movement achieved by moving the movable member toward the horizontal direction in the major axis direction.

Accordingly, a control device for use in a cursor positing device is provided. The control device includes: a housing defining an accommodation chamber; a control module positioned on the housing, wherein the control module comprises a movable member; a sensing module; and a circuit module positioned within the accommodation chamber and comprising a microprocessor electrically coupled with the sensing module; wherein the sensing module generates a first sensing signal in response to a first displacement variance in case of the first displacement variance achieved by moving said movable member in a major axis direction and transmits the first sensing signal to the microprocessor.

In one embodiment, the movable member comprises a movable sleeve; or the major axis is a horizontal axis; or the first sensing signal is configured to reset the cursor to a first reset point; or the first sensing signal is indicative of a direction and amount of movement of said movable member relative to said housing; or the control device further comprises a detecting module facing said movable member and electrically coupling with said microprocessor.

### BRIEF DESCRIPTION OF THE DRAWINGS

FIG.1 is a perspective view of a control device in accordance with the first embodiment of the present invention.

FIG.2 is an exploded view of the control device in accordance with the first embodiment of the present invention.

FIG.3 is another perspective view of the control device in accordance with the first embodiment of the present invention after removal of the second cover shell.

FIG.4 is a circuit block diagram of the circuit module of the control device in accordance with the present invention.

FIG.5 is a schematic sectional side view of the present invention illustrating the movable member rotated in the carrier frame.

FIG.6 is a schematic drawing of the present invention illustrating the movable member moved axially 1eftwards in the carrier frame.

FIG.7 is a schematic sectional side view of the present invention illustrating the movable member pressed downwards.

FIG.8 is an exploded view of present invention, illustrating an alternate form of the control module.

FIG. 9 is an exploded view of another alternate form of the control device in accordance with the second embodiment of the present invention.

FIG.10 is a schematic top view of the control device shown in FIG. 9.

FIG.11 is an exploded view of the control device in accordance with the third embodiment of the present invention.

FIG.12 is a partial exploded view of the control device in accordance with the third embodiment of the present invention.

FIG.13 is a partial exploded view of the control device in accordance with the third embodiment of the present invention.

FIG.14A is a schematic cross view of the control device in accordance with the third embodiment of the present invention.

FIG.14B is a schematic cross view of the control device in accordance with the fourth embodiment of the present invention.

FIG.14C is a schematic cross view of the control device in accordance with the fifth embodiment of the present invention.

FIG.15A is a schematic view of the sensing module in accordance with the sixth embodiment of the present invention.

FIG.15B is a schematic view of the sensing module in accordance with the seventh embodiment of the present invention.

FIG.16 is a schematic top view of a control device according to the prior art.

### DETAILED DESCRIPTION OF THE PREFERRED EMBODIMENT

For the achievement on objects and effects aforementioned, the present application is introduced technical means and members in company with the drawings of the present application.

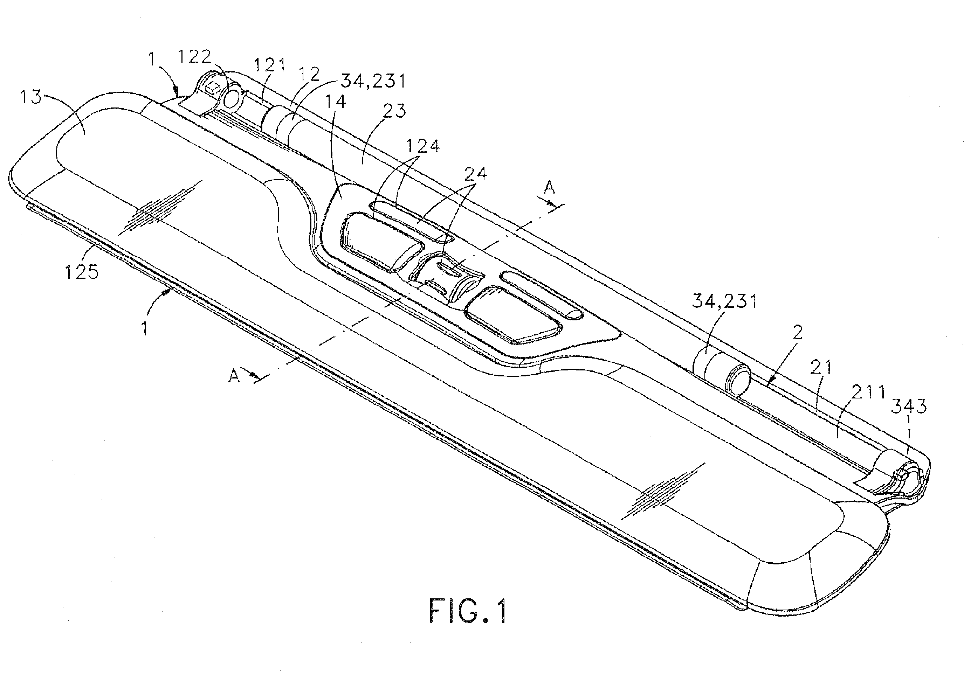

Referring to FIGS.1, 2 and 3, a control device in accordance with the first embodiment of the present invention includes a housing 1, a control module 2 and a circuit module 3.

The housing 1 includes a first cover shell 11, a second cover shell 12 covered on the first cover shell 11 and an accommodation chamber 10 defined between the first cover shell 11 and the second cover shell 12. The first cover shell 11 includes a plurality of limiters 111 protruded from the top wall near the rear side thereof and suspending in the accommodation chamber 10, a plurality of pivot holders 113 symmetrically bilaterally protruded from the top wall near the front side thereof and suspending in the accommodation chamber 10, a plurality of locating blocks 112 symmetrically bilaterally protruded from the top wall thereof on the middle between the limiters 111 and the pivot holders 113, two upright pivot lugs 114 vertically upwardly extended from the top wall thereof on the middle between the locating blocks 112 and the pivot holders 113, and a recessed portion 115 located on the top wall thereof between the limiters 111 and the upright pivot lugs 114.

The second cover shell 12 comprises a plurality of hollow grooves 121 corresponding to the limiters 111 disposed near the rear side thereof, two receiving grooves 122 disposed at two opposite lateral sides (along with a major axis direction) relative to the hollow grooves 121 to connect the accommodation chamber 10, a plurality of limiters 123 respectively located on the front and rear sides relative to the hollow grooves 121, a plurality of slots 124 corresponding to the upright pivot lugs 114, a wrist rest 125 located on the front side thereof, a cushion pad 13 made of a soft or elastic material and fastened to the wrist rest 125 and a decorative plate 14 fastened to the top wall thereof around the slots 124.

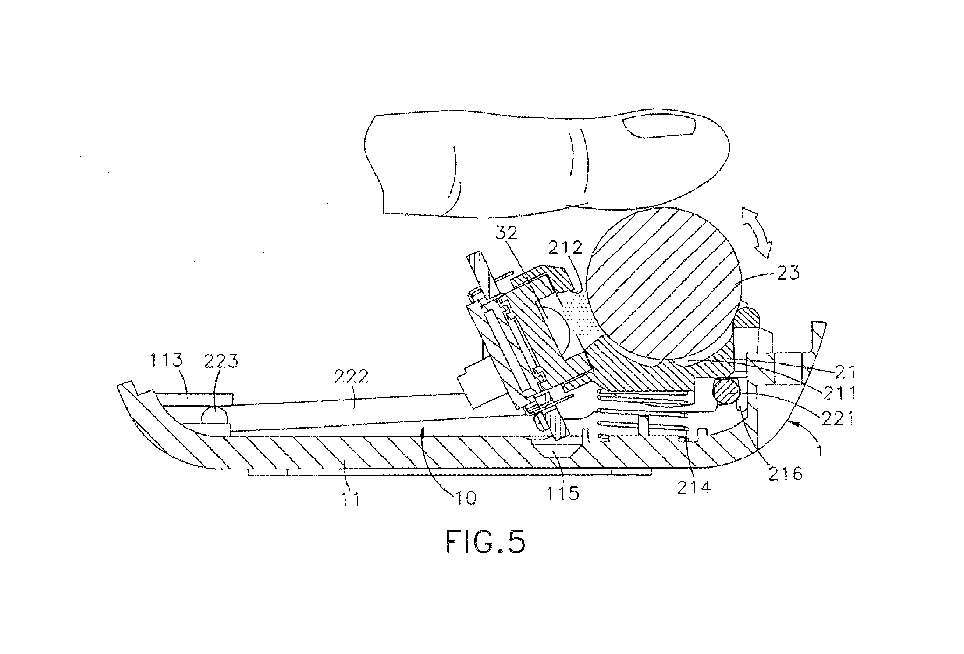

The control module 2 comprises a carrier frame 21, a balance bar 22, a movable member 23 and a plurality of operating members 24. The carrier frame 21 is accommodated in the hollow grooves 121 and partially extended inside the accommodation chamber 10. The carrier frame 21 includes a movable member groove 211 located at one side of the carrier frame 21 away from said accommodation chamber 10 and adapted for accommodating the movable member 23. The carrier frame 21 further includes a through hole 212 connecting the movable member groove 211 to the accommodation chamber 10. A plurality of coupling lugs 213 respectively coupled to the limiters 111 of the first cover shell 11, a plurality of elastic members 214, a press portion 215 and a plurality of bottom hooks 216 (shown in FIG.5) are configured to enable the carrier frame 21 to be moved up and down relative to the housing 1. The balance bar 22 made of a wire rod includes a narrow elongated base portion 221 rotatably coupled to the bottom hooks 216 of the carrier frame 21, two side arm portions 222 respectively perpendicularly extended from the two distal ends of the narrow elongated base portion 221 in a parallel manner and respectively coupled to the locating blocks 112, and two end tips 223 respectively perpendicularly extended from the distal ends of the side arm portions 222 remote from the narrow elongated base portion 221 and respectively pivotally coupled to the pivot holders 113.

A sensing module includes left-side and right-side sensing modules 34 respectively at the distal sides of the control module 2. The left-side sensing modules 34 includes a left magnet 231 and a left magnetic sensing module 348 correspondingly positioned each other. The right-side sensing module 34 includes a right magnet 231 and a right magnetic sensing module 348 correspondingly positioned each other. The left magnet 231 and the right magnet 231 are positioned respectively at two sides of the movable member 23. The movable member 23 is accommodated within the accommodation chamber 10. The operating members 24 are respectively exposed to the slots 124 of the second cover shell 12 and exposed to the outside of the housing 1 for operation by a user.

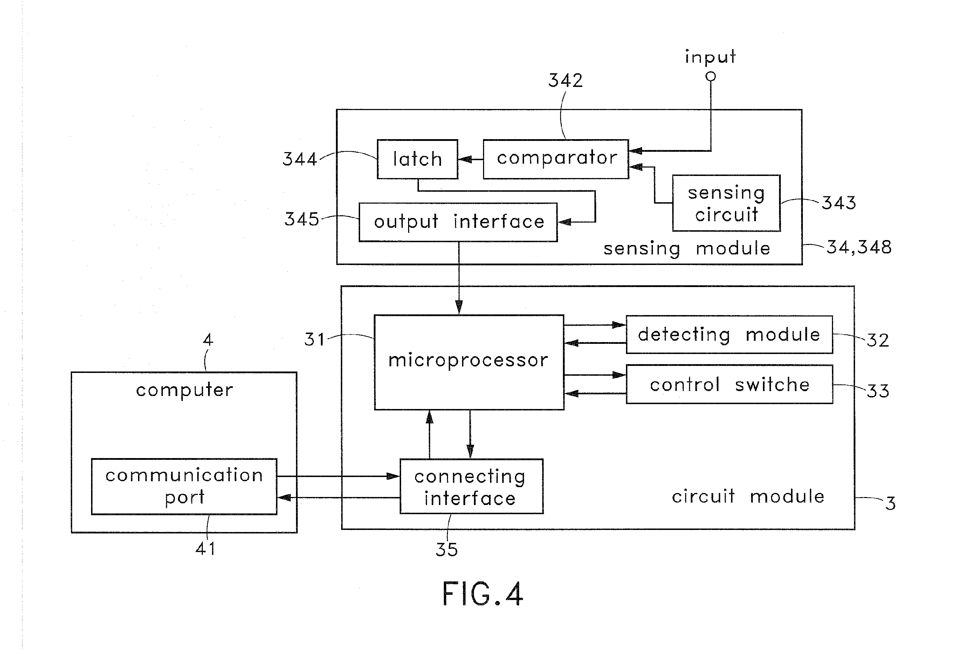

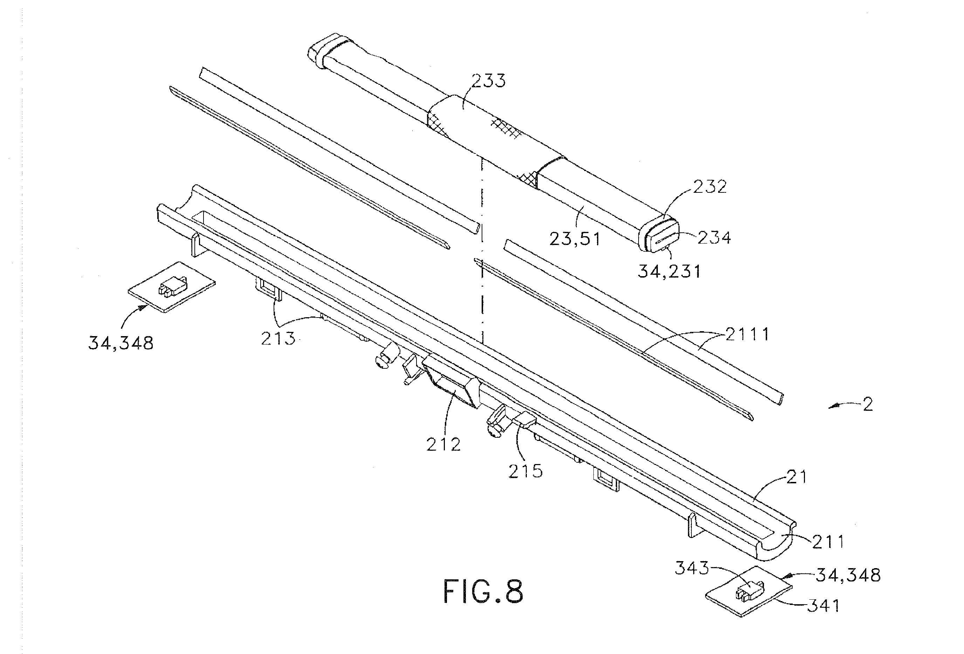

The circuit module 3 includes a microprocessor 31 and a detecting module 32. The detecting module 32, which is electrically coupled with the microprocessor 31 and exposed to the through hole 212 of the carrier frame 21, is configured to detect the rotation and horizontal movement of an object within movable member groove 211. Next, the detecting module 32 is exposed to the through the hole 212 outside of the movable member groove 211. Via the electrical connection of the microprocessor 31, the detecting module 32 is electrically coupled with the press portion 215 of the carrier frame 21 and a plurality of control switches 33 trigged by the operating members 24. The left and right magnetic sensing modules 348 sense by way of no-touch respectively the left and right magnets 231 at the distal ends of the movable member 23, and transmit control signals to the microprocessor 31. The connecting interface 35 electrically connected to the microprocessor 31 and electrically connectable to a communication port 41 of a computer 4 (shown in FIG.4) may be a USB, PS2 or any of a variety of other commercial electrical connection means. It is noted that the detecting module 32 is general optical-image type to detect the rotation and horizontal movement of the movable member 23 or sleeve 233 (shown in FIG.8), but the type of the detecting module 32 is not limited to optical-image type in the present application.

Further, instead of the design of consisting of a first cover shell 11 and a second cover shell 12, the housing 1 can be a single-piece member having an accommodation chamber 10 defined herein and a plurality of hollow grooves 121 in communication with the accommodation chamber 10 for the mounting of the carrier frame 21 to carry the movable member 23.

Referring to FIGS. 4 and 9 and FIG. 2 again, the left and right magnetic sensing modules 34 include a circuit board 341, a comparator 342 with a first and a second inputs and an output terminal. The first input terminal is electrically coupled to an external power source for electric current input. The second input terminal is electrically coupled to a sensing circuit 343 in the moving path of the movable member 23. The output terminal is electrically coupled to a latch 344 and the latch 344 is further electrically coupled to an output interface 345 for transmitting a signal from the latch 344 to the microprocessor 31. By way of no-touch sensing with the left and right magnetic sensing module, not only the problems on mechanic fatigue or poor contact are prevented, but also the signal may be emitted accurately. Furthermore, the control device with a compact size because a comparator 342, a sensing circuit 343, latch 344 and output interface 345 on the circuit board 341 are installed to be associated with the use of left and right magnetic sensing module 348, so as to reduce the whole size of the control device.

The sensing circuit 343 may comprise Hall integrated circuits or MR sensor (magneto-resistive sensor, MR sensor). In case of Hall integrated circuits, the center of Hall ICs faces respectively right the magnetic poles of the left and right magnets 231. In case of MR sensors, the left and right magnets 231 are faced respectively toward MR sensors and biased predetermined distances along the sides of the control module (about 2 to 2.5 mm for example).

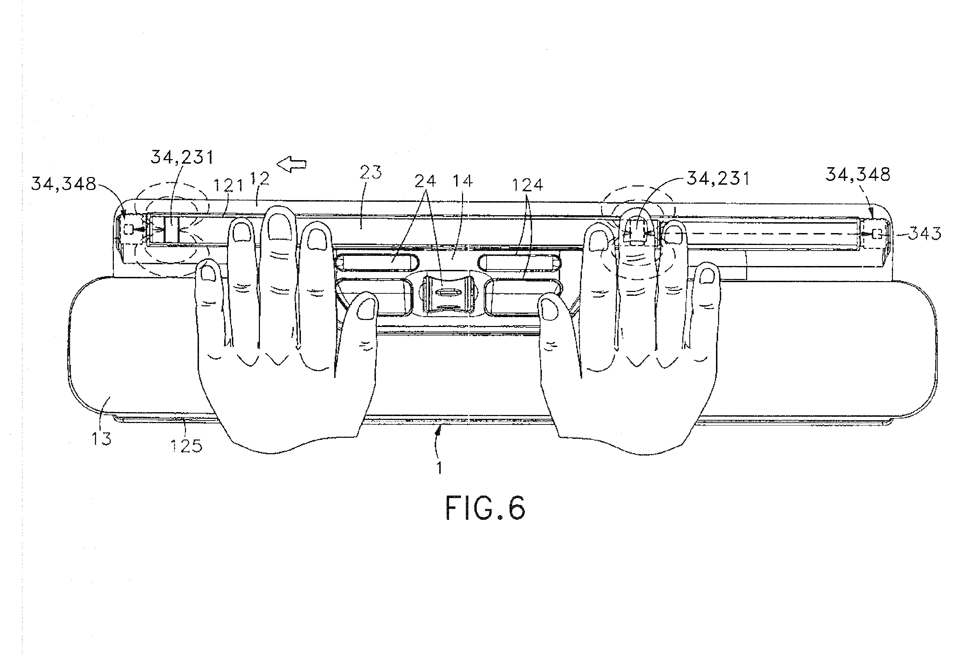

Referring to FIGS.5 and 6 and FIGS.2 and 3 again, when using the control device, the user can rest the wrists on the cushion pad 13 and operate the operating members 24 and the movable member 23 with the fingers. The movable member 23 can be rotated in the movable member groove 211 clockwise or counter-clockwise by the user. When the user rotates the movable member 23 in the movable member groove 211, the detecting module 32 of the circuit module 3 senses the direction and amount of rotation of the movable member 23 and provides a corresponding control signal to the computer 4 to move the cursor up/down on the display screen of the computer 4. Further, the length of the movable member 23 is shorter than the length of the movable member groove 211. Thus, the user can slide the movable member 23 axially leftwards or rightwards in the movable member groove 211.

One of preferred embodiments, the detecting module 32 may be an optical-image sensing module with the comparison of continuous change for optical images in time sequence, but limited to in the present application. Furthermore, in one embodiment, the detecting module 32 may be configured to detect the rotation of the movable member 23, and the sensing module is configured to both sensing the movement in the horizontal direction of the movable member 23 and sensing the displacement variance for the reset of the cursor. However, in another embodiment, the detecting module 32 may be configured to detect the movement in the horizontal direction of the movable member 23, and the sensing module is configured to both sensing the rotation of the movable member 23 and the displacement variance for the reset of the cursor. In another embodiment, the sensing module is configured to sensing the displacement variance for the reset of the cursor, and the detecting module 32 cooperates with any suitable means for execution of sensing the rotation or the movement of the movable member 23 to sense the rotation and the movement in the horizontal direction of the movable member 23.

When the movable member 23 is moved axially in the movable member groove 211 toward one receiving groove 122, the right or right magnetic sensing module 348 senses an enhanced strength of the magnetic field emitted by the respective left or right magnet 231, i.e., the strength of the magnetic field sensed by the left or right magnetic sensing module 348 is changed subject to distance variance between the respective left or right magnet 231 and the left or right magnetic sensing module 348, to measure whether the displacement variance of the movable member 23 approaches or is over a predetermined value.

In detail, the left sensing module 34 generates a first sensing signal in response to a first displacement variance in case of the first displacement variance achieved by moving the movable member 23 toward left in a major axis direction and transmits the first sensing signal to the microprocessor 31 to reset a cursor to a first reset point. Similarly, the right-side sensing module 34 generates a second sensing signal in response to a second displacement variance in case of the second displacement variance achieved by moving the movable member 23 toward right in the major axis direction and transmits the second sensing signal to the microprocessor 31 to reset a cursor to a second reset point. That is, the cursor on a screen of the computer 4 is reset to left or right point by receiving control signals subject to the predetermined change of strength of the magnetic field. Because both the magnetic field of the left or right respective magnet 231 attenuates at low speeds and the electronic component parts of the right or right magnetic sensing module 348 may accurately detect, the left or right magnetic sensing module 348 effectively senses the sliding movement of the movable member 23 in the movable member groove 211 and outputs a respective control signal accurately for resetting or reposition.

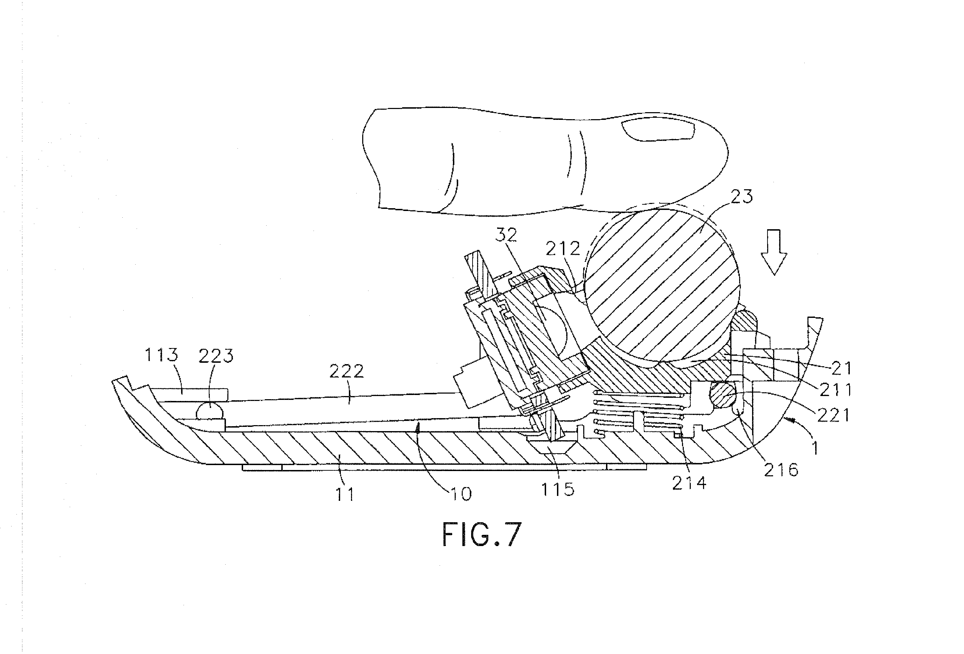

Referring to FIG.7 and FIGS.2 and 3 again, when using the control device, the movable member 23 is pressed downward the carrier frame 21 relative to the housing 1. Subject to the coupling effect between the coupling lugs 213 and the limiters 111;123 of the first and second cover shells 11;12, the carrier frame 21 is forced downwardly to compress the elastic members 214, at the same time the press portion 215 is forced against the associating control switch 33 to produce a cursor-click signal. The detecting module 32 is installed at one side of the carrier frame 21. During downward displacement of the carrier frame 21, the detecting module 32 keeps sensing the motion of the movable member 23 in the movable member groove 211. Thus, the user can press down and slide the movable member 23 to drag or click the cursor. When released the pressure from the movable member 23, the elastic members 214 immediately return the carrier frame 21 upwardly to its former position subject to functioning between the coupling lugs 213 and the limiters 111;123 of the first and second cover shells 11; 12.

Because the detecting module 32 is installed at one side of the carrier frame 21 but not mounted to the bottom side of the carrier frame 21, the detecting module 32 may be moved into the recessed portion 115 along with the carrier frame 21 being forced downwards. Thus, the accommodation chamber 10 simply only needs to accommodate the coupling lugs 213, the elastic members 214, the bottom hooks 216 and the balance bar 22 for allowing the carrier frame 21 to move up and down. Therefore, the vertical height of the housing 1 can be minimized. Further, because the through hole 212 of the carrier frame 21 is disposed at one side relative to the movable member groove 211 but not at the bottom side of the carrier frame 21, outside dust will not enter the inside of the housing 1 through the through hole 212 to contaminate the detecting module 32 of the circuit module 3, assuring constant sensing accuracy of the detecting module 32.

As stated above, the movable member 23 is slidably axially leftwards and rightwards in the movable member groove 211 of the carrier frame 21. When the user presses down the movable member 23, the pressure may be applied to the movable member 23 at a location deviated from the midpoint of the movable member 23, causing the movable member 23 and the carrier frame 21 to tilt. This problem is eliminated subject to the functioning of the balance bar 22. As stated above, the end tips 223 of the balance bar 22 are respectively pivotally coupled to the pivot holders 113 of the first cover shell 11. When the carrier frame 21 is moved downwards, the balance bar 22 is biased to keep the carrier frame 21 in balance.

However, it is understood that the detecting module 32 may be not moved downward along with the downward movement of the carrier frame 21.

Referring to FIGS.1, 2, 3 and 6 again, because the movable member groove 211 of the carrier frame 21 is exposed to the hollow grooves 121 of the second cover shell 12 and the length of the movable member 23 is shorter than the movable member groove 211, the user can pick up the movable member 23 from the carrier frame 21 directly with the hand for cleaning if the movable member 23 is contaminated or covered with dust or any other impurities. Further, the movable member 23 can be made of any of a variety of materials of different specific gravities to fit different users.

Referring to FIG.8 and FIG.2 and FIG.3 again, because the movable member 23 is rotatably and axially slidably accommodated in the movable member groove 211 of the carrier frame 21, a friction resistance may be produced between the movable member 23 and the carrier frame 21 when the user moves or rotates the cover shell 51 of the movable member 23 in the movable member groove 211. To avoid this problem, the movable member 23 is preferably made of polyoxymethylene (POM), polytetrafluoroethylene (PTFE), or any of a variety of other self-lubricating materials for the advantage of low friction resistance and high stability. Further, slide-assisting members 2111 may be mounted in the movable member groove 211 at two sides to assist sliding motion of the movable member 23 in the movable member groove 211. The slide-assisting members 2111 can be strip members made of unsaturated polyester (UPE) or polytetrafluoroethylene (PTFE), or ball members made of ruby, ceramic or wear resistant material. Furthermore, the movable member 23 can be a solid member, a hollow member having an axial slot 234, or stuffing means filled in the axial slot 234 to change the weight of the movable member 23. Subject to the aforesaid measures, the movable member 23 can be rotated or moved in the movable member groove 211 smoothly with less effort.

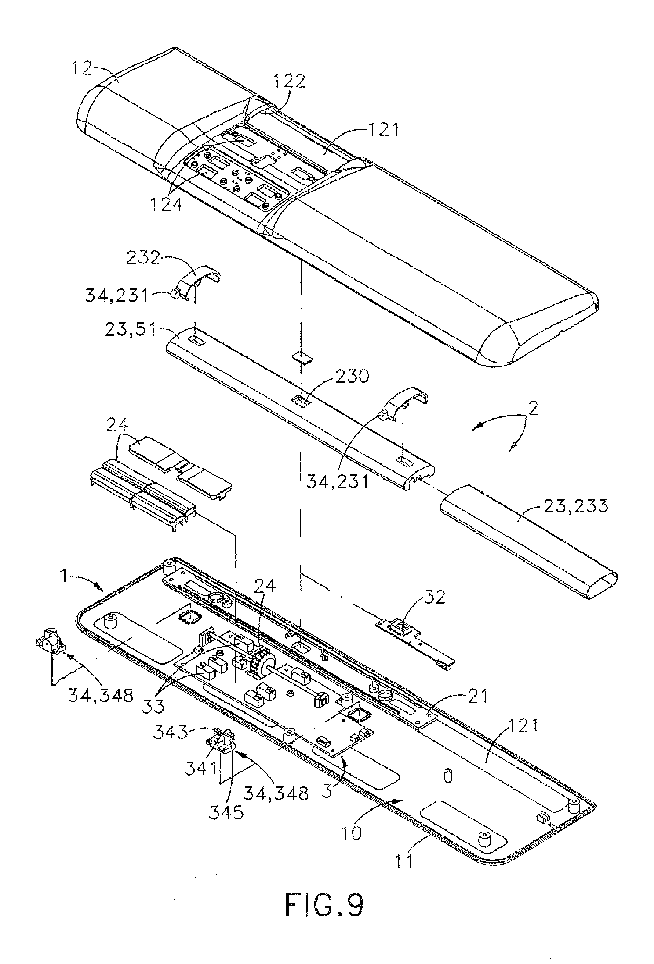

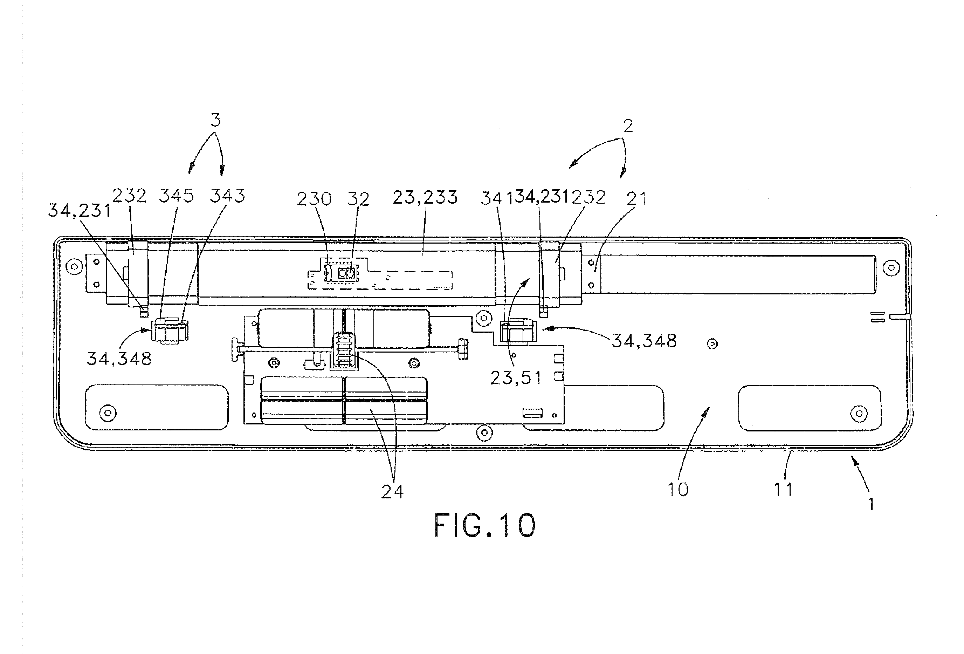

Referring to FIGS.9 and 10, the carrier frame 21 of the control module 2 is positioned in the accommodation chamber 10 of the housing 1 below the hollow groove 121, and the movable member 23 is accommodated in the carrier frame 21 and the cover shell 51 of the movable member 23 is exposed to the hollow groove 121. The According to this embodiment, the movable member is an elongated bar having a hollow bottom side and supported with its front and back sides on the carrier frame 21. Further, the left and right ends, i.e., the two distal ends of the movable member 23 are respectively inserted into the receiving grooves 122 at the left and right sides of the hollow groove 121. The movable member 23 may include a sleeve 233 sleeved outside the through hole 230. Further, the sleeve 233 surrounds the cover shell 51 of the movable member 23 and the carrier frame 21. Further, each left and right magnet 231 can be arranged to protrude over the respective ends of the movable member 23. Alternatively, each magnet 231 can be arranged to project into the inside of the movable member 23.

The detecting module 32 for the detection of rotation and horizontal movement by the sleeve 233 is exposed to the through hole 230 of the carrier frame 21, and transmits the corresponding signals indicative of vertical or horizontal displacements for the control of the cursor.

Further, the detecting module 32, which is configured for detecting the rotation of the sleeve 233 and the horizontal movement of the detecting module 32, may face right the through hole 230 of the carrier frame 21 vertically cut through the top and bottom sides thereof on the middle, and generate vertical displacement signal and horizontal vertical displacement. It is understood that a moving slot or moving guider (not shown) may be positioned below the movable member 23 (or the cover shell 51 integrated with the carrier frame 21) for moving the movable member 23 (or the cover shell 51 integrated with the carrier frame 21) in a horizontal direction. Further, the detecting module 32 may be combined to the movable member 23, instead of on the carrier frame 21, but not limited to the present application.

The force may be applied on the sleeve 233 to move the sleeve 233 toward left or right. The left and right magnets 231 may be moved along with the movement of the movable member 23 including the sleeve 233. Thus, the left and right magnetic sensing module 348 may generate reset or reposition signals in response to the change of the strength of the magnetic field.

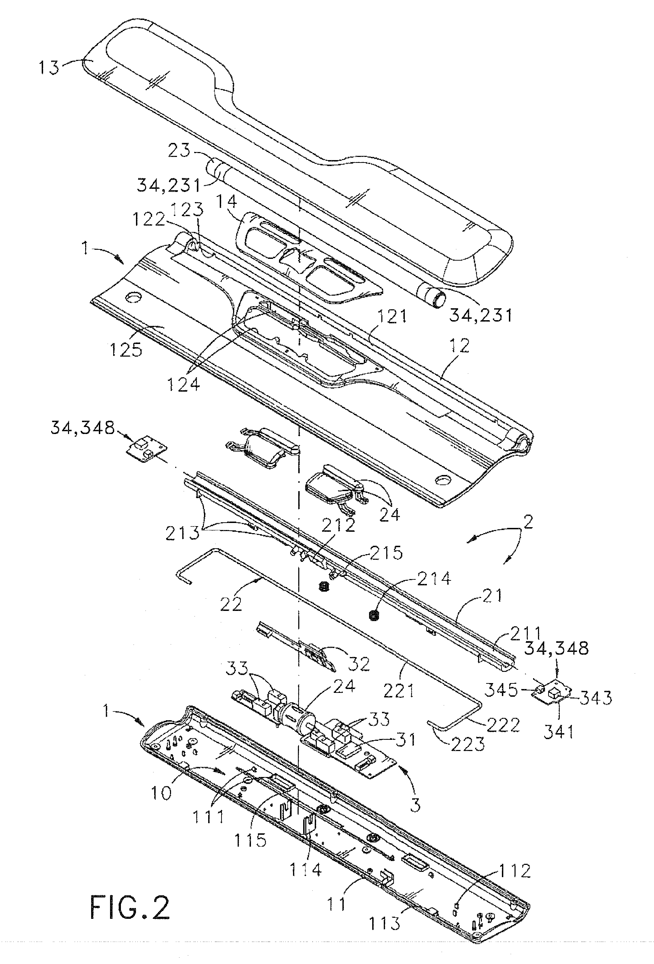

Referring to FIGS.2, 3, 8 and 9, the left and right magnets 231 and the movable member 23 can be made in integrity by insert molding. Alternatively, the left and right magnets 231 can be fastened to the movable member 23 by adhesion, snap means or welding. Alternatively, the magnet holders 232 can be respectively mounted on the two distal ends of the movable member 23 to hold the left or right respective magnet 231. Each magnetic holder 232 can be made having a magnet mounting hole for accommodating the left or right respective magnet 231. Further, the movable member 23 can be made in the shape of a cylindrical bar, rectangular bar, oval bar or pentagonal bar, or in the shape of a narrow, elongated, rectangular or arched cover. If the movable member 23 is made in the form of a cylindrical bar that is rotatable in the carrier frame 23, the sleeve 233 is unnecessary. If the movable member 23 is not rotatable in the carrier frame 23, the sleeve 233 is necessary and rotatable relative to the movable member 23. Further, the movable member 23 (or the sleeve 233) can be made of any of a variety of materials, such as metal, rubber, plastics, wood, Teflon, or cloth. Regardless of the movable member 23 (or the sleeve 233) made of hard or soft material, by means of operating the movable member 23 (or the sleeve 233) to move the left and right magnets 231, the left and right magnetic sensing module 348 accurately sense respectively the change of the strength of the magnetic field indicative of the axial displacement of the movable member 23 in the carrier frame 21.

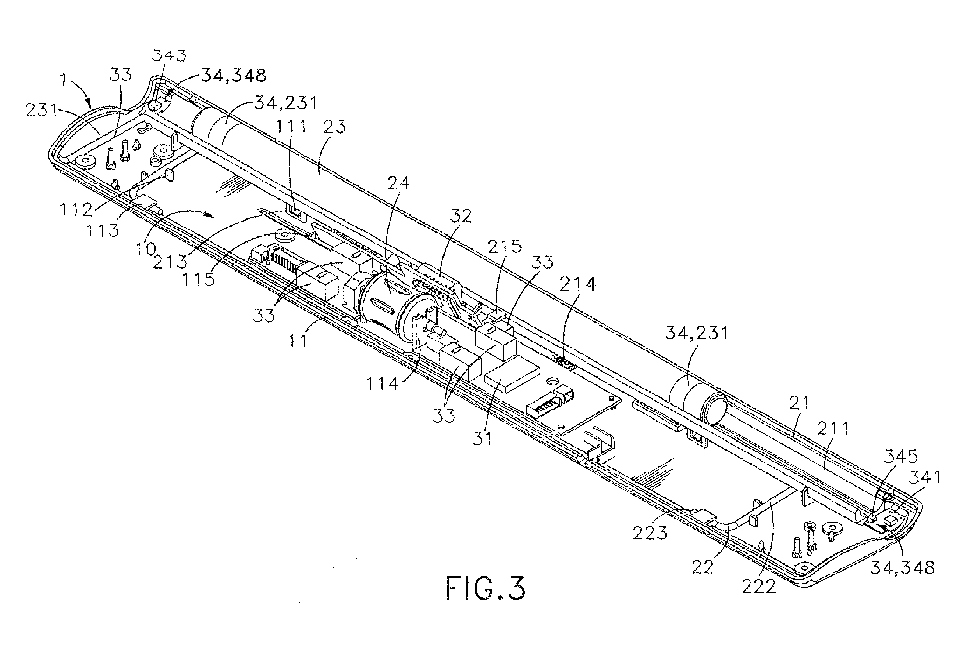

Referring to FIGS.2 and 3 again, the operating members 24 are respectively mounted in the slots 124 and exposed to the top side of the housing 1 for operation by the user. Each operating member 24 can be a button, roller, rolling ball, or any finger-operable member operable by the user to trigger the associating control switch 33 of the circuit module 3 in controlling the cursor.

The present application is not limited to the embodiments with a single movable member to achieve a displacement variance. Alternatively, there are a plurality of movable parts, and some or all of the movable parts achieve the displacement variance simultaneously, sequentially, or alternatively.

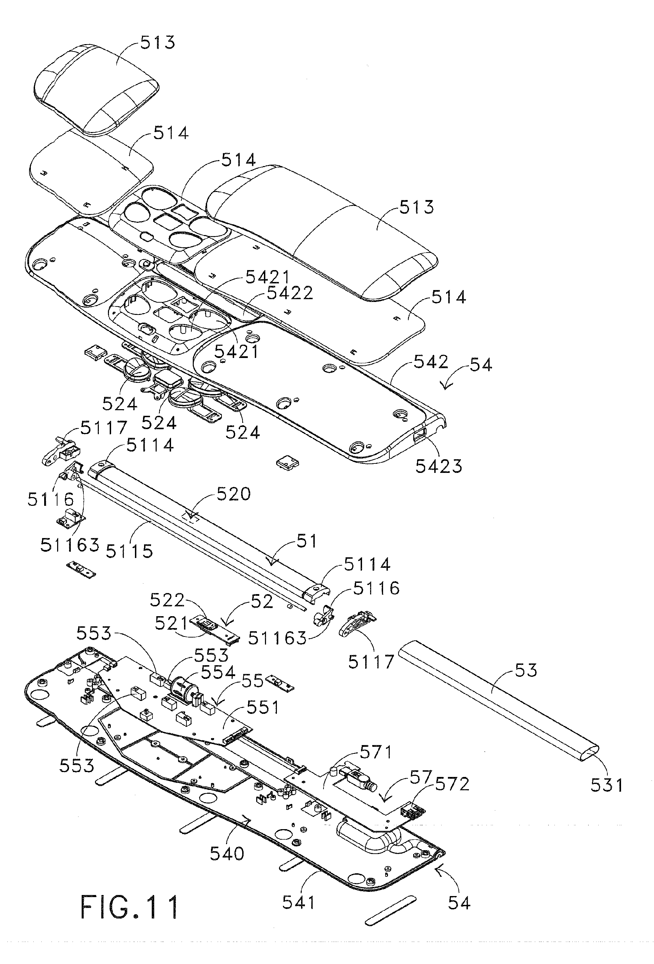

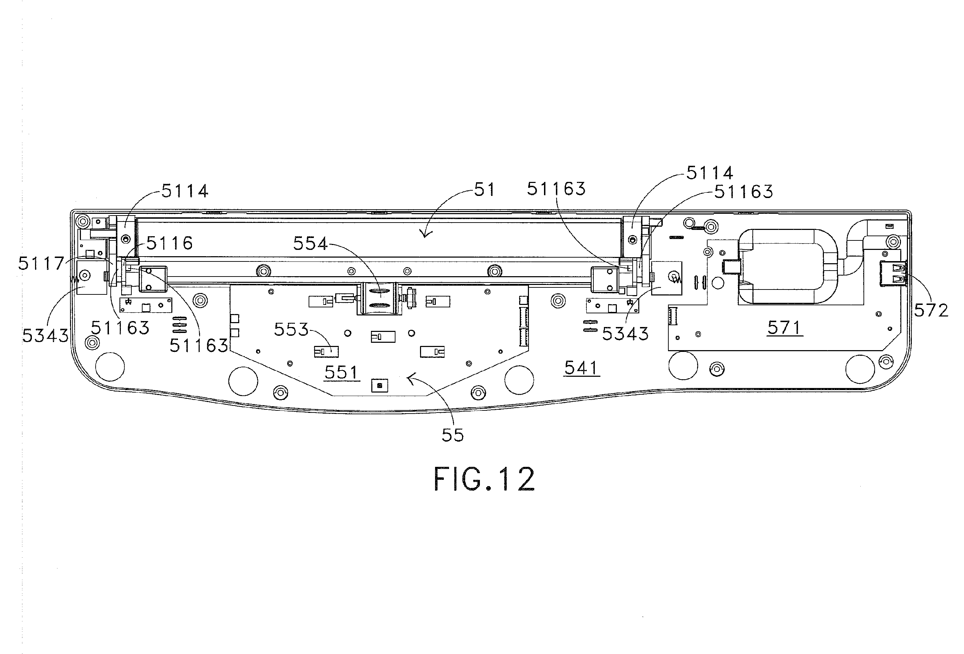

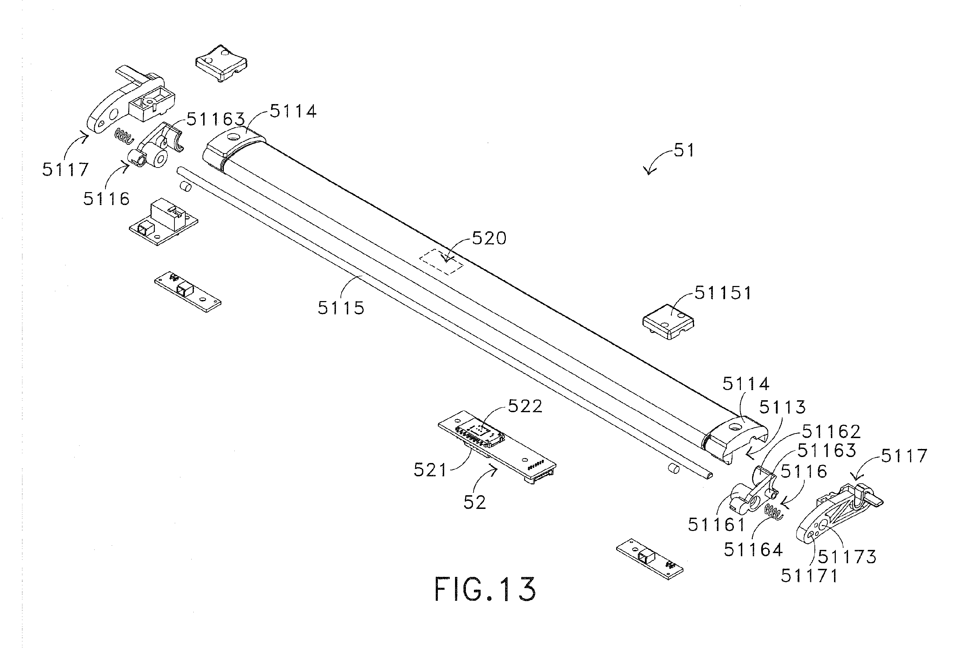

FIG.11 is an explosive view showing control device in accordance with the third embodiment of the present application. FIG.12 is a top view of housing of control device in accordance with the third embodiment of the present application. FIG.13 is a partial explosive view showing partial control module and circuit module in accordance with the third embodiment of the present application.

Referring to FIG.11, FIG.12 and FIG.13, a control device includes a cover shell 51, a circuit module 52, a sleeve 53 (as a movable member in this embodiment) and a housing 54. In the third embodiment, the housing 54 includes an accommodation chamber 540 defined by a base 541 and top cover 542 of the housing 54. Most of members of the control device are positioned within the accommodation chamber 540, such as the cover shell 51, circuit module 52, sleeve 53 and a plurality of control components 524. The circuit module 52 at least includes a detecting module 521 (or further includes a microprocessor 522)

The sleeve 53 is wore around the cover shell 51, and the circuit module 52 positioned in a chamber 5113 face upward exclusively to detect the inner surface 531 of the sleeve 53. That is, the circuit module 52 with a detecting circuit is covered by the sleeve 53 and configured to detect the inner surface 531 of the sleeve 53. In response to the horizontal movement and rotation of the sleeve 53, the detecting module 521 generate horizontal-displacement and vertical-displacement signals for controlling the horizontal and vertical displacements of the corresponding cursor. In other embodiment, a through hole 520 may be positioned on a top surface of the cover shell 51, and the circuit module 53 may be turned over to make the detecting module 521 face the through hole 520 for detecting the inner surface 531 of the sleeve 53.

A plurality of slots 5421 and a hollow groove 5422 are located on the top cover 542 to expose operating members 524, 554 and sleeve 53 wore around the cover shell 51 hereunder. Next, a plurality of cushion pads 513 and decorative plates 514 are positioned above the top cover 542. The cushion pads 513 made of soft or elastic material is fastened to the wrist rest, and there may be another slot corresponding to the slot 5421 on the decorative plates 514 to expose the operating members hereunder.

Next, most members of the control device may be accommodated within the accommodation chamber 540 and mounted onto the base 541. Please refer to FIG.12 and FIG.13, a circuit module 55 includes a circuit board 551 mounted onto the base 541, and a plurality of control switches 553 and the operating member 554 are mounted onto the circuit board 551. Some of control switches 553 are respectively associated with the operating members 524 thereon. The operating member 524, such as button, wheel, ball or others capable of being operated by a user, is pressed or rolled by the user to trigger the control switches 553 of the circuit module 55 for operating a cursor, but the present application does not limit these examples aforementioned.

A circuit module 57 is accommodated within the accommodation chamber 540 and mounted onto the base 541. The circuit module 57 includes a circuit board 571 and a connecting interface 572 positioned at one side of the circuit board 571. There is a slot 5423 at one side of the top cover 542 to expose the connecting interface 572. It is noted that the circuit module 55 and the circuit module 57 may be integrated into a single circuit board. Other circuit modules mentioned in following embodiments may be separated with each another or integrated. There may be conductive lines or interfaces to couple among these circuit modules or exterior apparatus in case of separate circuit modules.

Referring to FIG.11, FIG.12 and FIG.13, a cover shell 51 is accommodated within the accommodation chamber 540 and located at the foreside of the circuit module 55 to correspond to the position of the hollow groove 5422 on the top cover 542. The cover shell 51 in a bar shape include two aligning slots 5114 respectively at the distal ends thereof. The control module includes a position axis 5115 located between the cover shell 51 and the circuit module 55, and the position axis 5115 includes two ends respectively sleeved through a push holder 5116 and a pressing member 5117. In one embodiment, the position axis 5115 is sleeved through from an axis hole 51161 of the push holder 5116 and an elastic member 51164 to the axis hole 51171 of the pressing member 5117. In this embodiment, the position axis 5115 is directly mounted by a mounting member 51151 of the control module onto the base 541. Alternatively, the position axis 5115 may be mounted onto other mounting member of the base 541.

Next, the push holder 5116 further includes a push member 51162 and a sleeve member 51163 positioned between push member 51162 and the axis hole 51161. The left and right magnets (not shown) are mounted into the sleeve member 51163. The left magnetic sensing module 5343 and the right magnetic sensing module 5343 are mounted onto the base 541 and respectively close to the left magnet and the right magnet in sleeve members 51163. The push holder 5116 is sleeved into the axis hole 51173 of the pressing member 5117 through the sleeve members 51163 and is slide within the axis hole 51173. The push holder 5116 is slide on the position axis 5115. When force in a major axis direction is applied on the push member 51162 of the push holder 5116, the push holder 5116 may approach toward the pressing member 5117, and at the same time the relative distance between the left magnet and the left magnetic sensing module 5343 (or the right magnet and the right magnetic sensing module 5343) is changed. Accordingly, the sleeve 53 is slide toward left in the major axis direction to push the left push holder 5116 to move in a first displacement variance, the left sensing module may generate a first sensing signal in response the achievement of the first displacement variance and transmit the first sensing signal to the microprocessor 522 (or other microprocessor of the circuit module 55, 57) to reset the cursor to a first reset position. Similarly, the sleeve 53 is slide right in the major axis direction to push the right push holder 5116 to move in a second displacement variance, the right sensing module may generate a right sensing signal in response the achievement of the right displacement variance and transmit the right sensing signal to the microprocessor 522 (or other microprocessor of the circuit module 55, 57) to reset the cursor to a second reset position. Furthermore, because of the movement of the push holder 5116 toward the elastic member 51164, the elastic member 51164 of the position axis 5115 is compressed to push the push holder 5116 back to the origin position via elastic energy. It is noted that the microprocessor 522 and other microprocessor are similar to the microprocessor 31, and are not repeated herein)

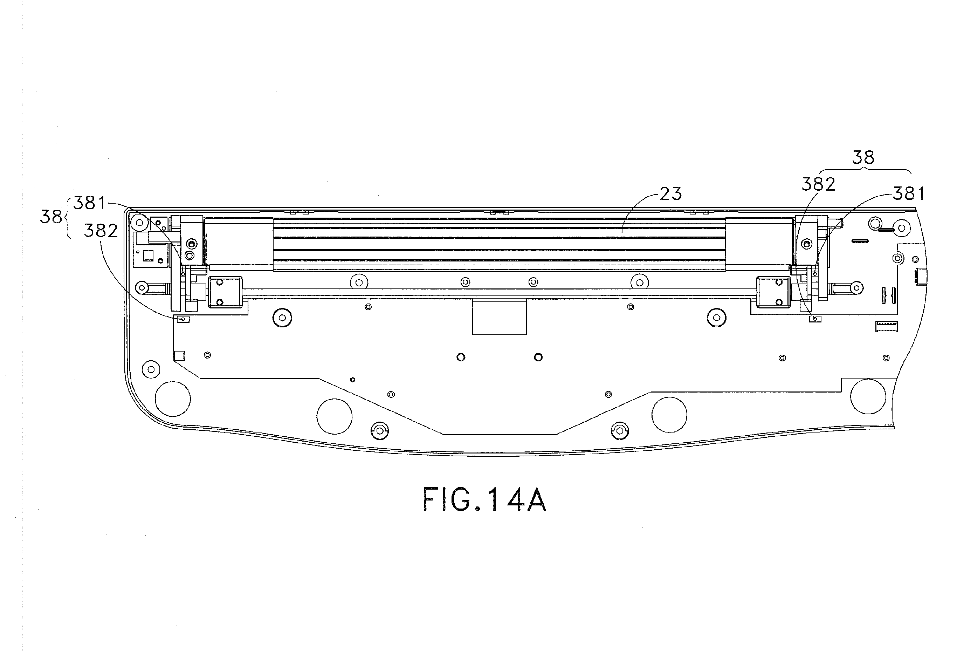

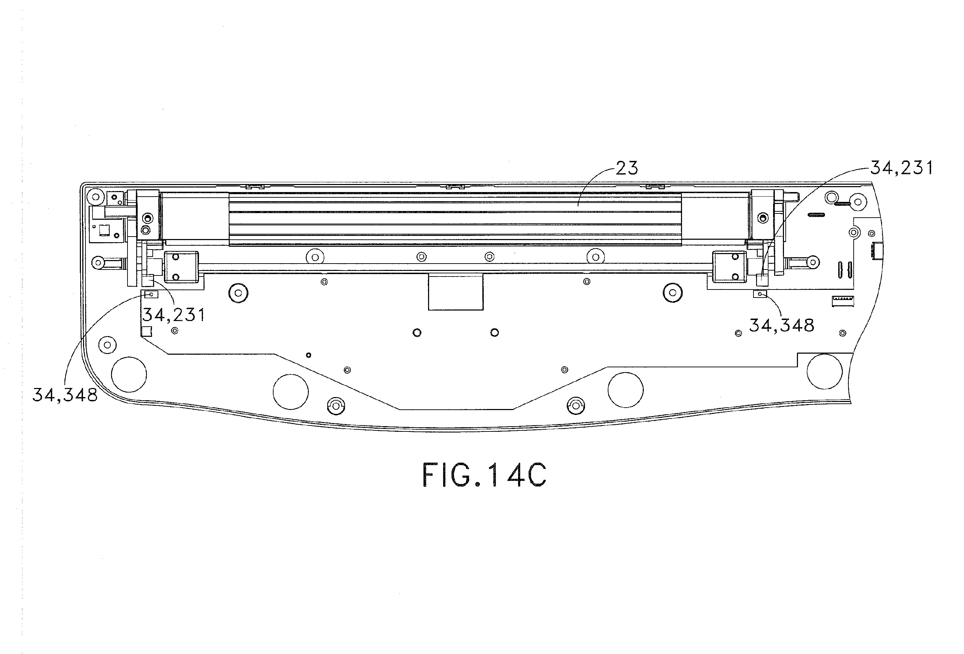

Accordingly, an optical module may be used as the control device, shown in FIG.14A. A left optical sensing module 38 as the left sensing module 34 includes a left optical transmitter 381 and a left optical receiver 382. A right optical sensing module 38 as the right sensing module 34 includes a right optical transmitter 381 and a right optical receiver 382. When the first displacement variance is achieved by the movement of the movable member 23, a portion of the movable member 23 intervenes between the left optical transmitter 381 and the left optical receiver 382, so as to generate the first sensing signal in response to the intervention by way of no-touch. In one embodiment, when the movable member 23 is moved left over a predetermined displacement variance, the portion of the movable member 23 enters between the left optical transmitter 381 and the left optical receiver 382, so as to prevent the left optical receiver 382 from receiving signal emitted by the left optical transmitter 381, so as to generate the first sensing signal by the left optical transmitter 381.

Similarly, when the second displacement variance is achieved by the movement of the movable member 23, a portion of the movable member 23 intervenes between the right optical transmitter 381 and the right optical receiver 382, so as to generate the second sensing signal in response to the intervention by way of no-touch. In a preferred embodiment, when the movable member 23 is moved right over another predetermined displacement variance, the portion of the movable member 23 enters between the right optical transmitter 381 and the right optical receiver 382, so as to prevent the right optical receiver 382 from receiving signal emitted by the right optical transmitter 381, so as to generate the second sensing signal by the right optical transmitter 381.

Of course, the left and right push holders 5116 may be deposited respectively at the distal sides of the movable member 23, shown in FIG.11 to FIG.13, and moved along with the movement of the movable member 23, as so to prevent the receipt of signal from the left optical transmitter 381 to the left optical receiver 382, or from the right optical transmitter 381 to the right optical receiver 382. Alternatively, the signal from left optical transmitter 381 to the left optical receiver 382 may be predetermined to be blocked, as well as one from right optical transmitter 381 to the right optical receiver 382. The block may be removed along with the movement of the movable member 23, so that the signals respectively from the left and right optical transmitters 381 can be received by the left and right optical receivers 381 and then transmitted to the microprocessor 522 (or other microprocessor of the circuit module 55, 57).

Accordingly, the blocking of the signal between an optical transmitter and an optical receiver may be achieved by leading the portion of the movable member 23 in between the optical transmitter and the optical receiver. Alternatively, the predetermined blocking of the signal between an optical transmitter and an optical receiver may be implemented by another push member positioned between the optical transmitter and the optical receiver. In case of the predetermined blocking of the signal, the portion of the movable member is moved toward a predetermined displacement variance to further push another push member, so that another push member is moved away the original position and fails to block the signal. Thus, the signal from the optical transmitter can be received by the optical receiver.

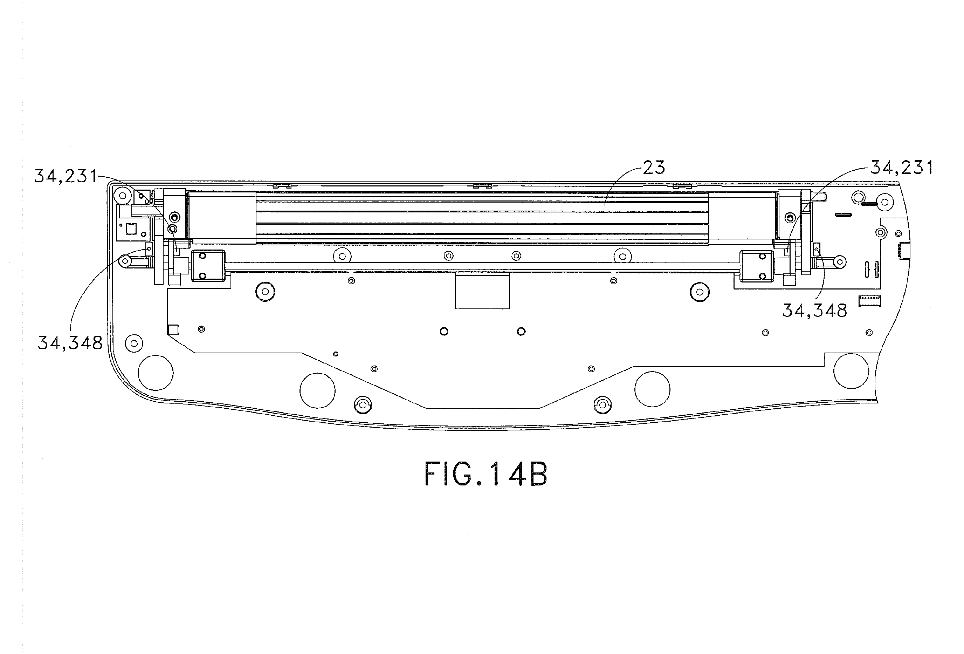

FIG.14B is a schematically top view of sensing module including Hall ICs and the circuit module in accordance with the present application. FIC.14C is a schematically top view of sensing module including MR sensor and the circuit module in accordance with the present application. It is noted that Hall ICs as magnetic sensing modules 348 should face right respectively the left and right magnets 231 to respectively sense the change of the strength of magnetic field cause by the left and right magnets 231 approaching or leaving away to measure the achievement of first displacement variance by the movable member 23. However, it is not necessary for MR sensors as magnetic sensing modules 348 to have the right position of MR sensor in the major axis direction with respect to the left and right magnets 231. The magnetic sensing modules 348 sense respectively the change of the strength of magnetic field caused by the left and right magnets 231 approaching or leaving away, and further measure whether the second displacement variance is achieved by the movement of the movable member 23 or not.

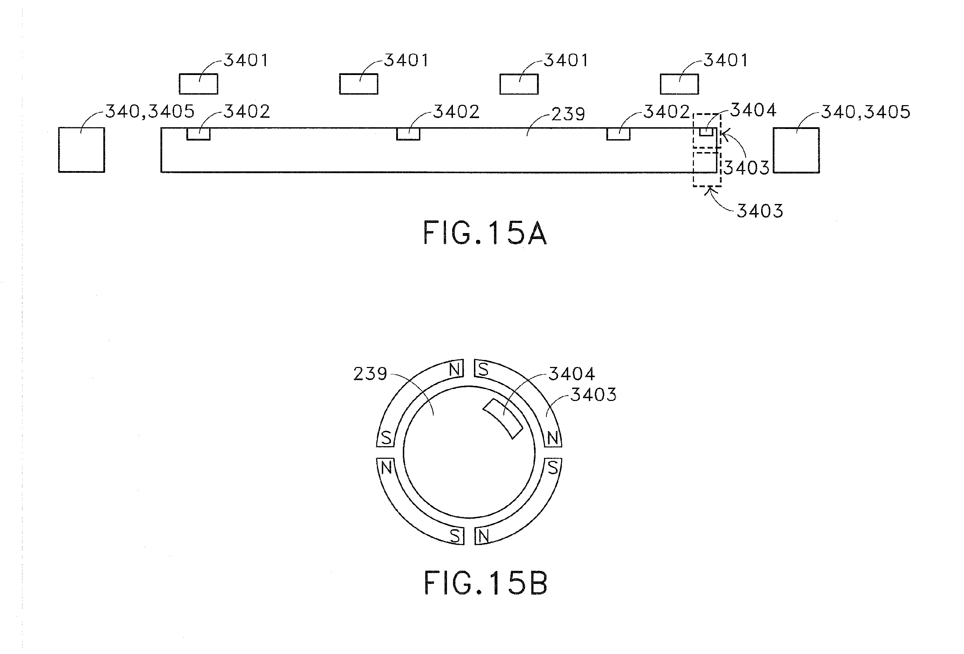

FIG.15A and FIG.15B are schematic views illustrating the position relationship of sensing module and control module in accordance with embodiments of the present application. The sensing module 340 further includes a plurality of horizontal-moving sensing modules 3401 spaced along with said major axis direction, and a plurality of magnets 3402 spaced mounted to the movable member 239. The magnetic field with respect to the magnets 3402 sensed by horizontal-moving sensing modules 3401 by way of no-touch may vary in response to the movable member 239 slide moving in the major axis direction and be used for the measurement of continuous displacement variance implemented by the movable member 239. A third sensing signal is generated in response to the continuous displacement variance and then transmitted to the microprocessor 31 (or other microprocessor). The microprocessor 31 generates control signal by judging continuous displacement variance to render the cursor implement corresponding horizontal displacement.

Similarly, the sensing module 340 further includes a plurality of vertical-moving sensing modules 3403 around said movable member 239 and at least one magnet 3404. When the movable member 239 rotates, the vertical-moving sensing modules 3403 are configured to sense by way of no-touch continuous variance of rotation achieved by rotation of said movable member 239 and generate a fourth sensing signal transmitted to the microprocessor 31 (or other microprocessor). The microprocessor 31 generates control signal by judging continuous displacement variance of rotation to render the cursor implement corresponding vertical displacement.

Accordingly, the detecting module 32 or the functions of horizontal and vertical detection implemented by the detecting module 521 aforementioned may be replaced by these horizontal-moving sensing modules 3401 and vertical-moving sensing modules 3403. It is understood that the reset or reposition of the cursor may be achieved by depositing another sensing module 3405.

In conclusion, the control device of the present invention has the advantages and features as follows:

1. When sliding the movable member 23 leftwards or rightwards, the left or right magnets 231 at respective end of the movable member 23 is led toward the left or right magnetic sensing module 348. The left or right magnetic sensing module 348 senses by way of no-touch the change of the strength of the magnetic field caused by the left or right magnets 231 approaching or leaving away, and generates corresponding control signal in response to the change of the strength of the magnetic field over a predetermined displacement variance so as to reset a controlled cursor by the control signal. Because no any mechanical fatigue or contact failure will be occurred by way of no-touch by the left or right magnetic sensing module 348, the invention assures high sensing accuracy and high control accuracy.

2. The magnetic sensing module 348 senses by way of no-touch the change of the strength of the magnetic field subject to the change of the distance between the magnets 231 and the magnetic sensing module 348. Thus, the movable member 23 can be made of a hard, soft or flexible material, such as metal, rubber, plastics, wood, Teflon or cloth, without any limitation. It is understood that the sleeve 53 in FIG.11, 12, and FIG.13 may implement the function or characteristic of the movable member aforementioned.

3. The comparator 342, magnetic sensing circuit 343, latch 344 and output interface 345 of the magnetic sensing module 348 are installed in the circuit board 341. As only limited number of electronic component parts are installed in the circuit board 341 and no any extra space is necessary for the operation of the left and right magnetic sensing module 348 within accommodation chamber 10 of the housing 1.

4. The displacement of the movable member may be sensed by way of optical sensing means or magnetic sensing means.

5. Similarly, depending on other application in practice, the detecting module 32 or the functions of horizontal and vertical detection implemented by the circuit module 52 may be replaced by the horizontal-moving sensing modules 3401 and the vertical-moving sensing modules 3403 for the purpose of no use for the detecting module 32 and the circuit module 52.

Although particular embodiments of the invention have been described in detail for purposes of illustration, various modifications and enhancements may be made without departing from the spirit and scope of the invention. Accordingly, the invention is not to be limited except as by the appended claims.

For the avoidance of doubt, the present invention includes the subject matter as defined in the following numbered paragraphs (abbreviated "para.").

Para 1. A control device, comprising a housing (1), a control module (2) and a circuit module (3), said housing (1) defining an accommodation chamber (10) and at least one opening (121) in communication between said accommodation chamber (10) and the space outside said housing (1), said control module (2) comprising a movable member (23) mounted in the at least one opening (121) of said housing (1) and movable relative to said housing (1), said circuit module (3) comprising a circuit board (341) mounted in said accommodation of said housing (1), a microprocessor (31) installed in said circuit board (341) and a rotation sensor installed in said circuit board (341) and electrically connected to said microprocessor (31) and adapted for sensing rotation of at least one part of said movable member (23) relative to said housing (1), wherein:
said movable member (23) comprises a magnet (231) located on each of two distal ends thereof;
said circuit module (3) further comprises a magnetic sensor module (34) electrically connected to said microprocessor (31) and adapted for sensing the strength of the magnetic field emitted by each said magnet (231) of said movable member (23) indicative of the direction and amount of a linear displacement of said movable member (23) relative to said housing (1) and producing a respective control signal.

Para. 2. The control device of Para 1, wherein said housing (1) is formed of a plurality of cover shells.

Para. 3. The control device of Para 1, wherein said control module (2) further comprises a carrier frame (21) mounted in said at least one opening (121) and partially extending to the inside of said accommodation chamber (10), said carrier frame (21) comprising a movable member groove (211) disposed outside said accommodation chamber (10) and adapted for accommodating said movable member (23) and a through hole (212) in communication between said movable member groove (211) and said accommodation chamber (10); said rotation sensor module (32) is mounted in said through hole (212) of said carrier frame (21) at an outer side remote from said movable member groove (211).

Para. 4. The control device of Para 3, wherein said control module (2) further comprises a balance bar (22) pivotally mounted in said accommodation chamber (10) and pivotally coupled to said carrier frame (21) to support said carrier frame (21) in balance; said control module (2) further comprises a plurality of elastic members (214) mounted on a bottom side of said carrier frame (21) opposite to said movable member groove (211) and stopped against a part of said housing (1) inside said accommodation chamber (10).

Para. 5. The control device of Para 1, wherein said housing (1) further comprises two receiving grooves (122) respectively disposed in said accommodation chamber (10) at two opposite sides; said control module (2) further comprises a carrier frame (21) mounted in said at least one opening (121) and partially extending to the inside of said accommodation chamber (10) and a sleeve (233) sleeved onto said carrier frame (21) and rotatable relative to said carrier frame (21), said carrier frame (21) comprising a movable member groove (211) connected between said receiving grooves (122) of said housing (1); said movable member (23) is movably accommodated in said movable member groove (211), having the two distal ends thereof respectively inserted into said receiving grooves (122) and a through hole (230) in communication between said movable member groove (211) and said accommodation chamber (10) and surrounded by said sleeve (233) for enabling said rotation sensor module (32) to sense rotation of said sleeve (233) relative to said housing (1).

Para. 6. The control device of Para 1, wherein said carrier frame (21) comprises a press portion (215) disposed outside said movable member groove (211); said circuit module (3) further comprises a control switch (33) electrically connected to said microprocessor (31) for triggering by said press portion (215) when said movable member (23) is pressed by a person to lower said carrier frame (21).

Para. 7. The control device of Para 1, wherein said movable member (23) comprises an axial slot (234) for the filling of a filling material to change the weight of said movable member (23).

Para. 8. The control device of Para 1, wherein said circuit module (3) further comprises a connecting interface electrically connected to said microprocessor (31) and electrically connectable to a communication port (41) of an external computer, said connecting interface being selected from the group of USB and PS2.

Para. 9. The control device of Para 1, wherein said movable member (23) and said magnets (231) are molded together by insert molding.

Para. 10. The control device of Para 1, wherein said magnets (231) are fastened to the two distal ends of said movable member (23) by one of the fastening techniques of adhesion, snap means and welding.

Para. 11. The control device of Para 1, wherein said movable member (23) comprises two magnet holders (232) respectively located on the two distal ends thereof to hold one associating magnet (231) .

Para. 12. The control device of Para 1, wherein said movable member (23) is made in one of the shapes of a cylindrical bar, a oval bar, a rectangular bar and a pentagonal bar.

Para. 13. The control device of Para 1, wherein said magnetic sensor module (34) comprises a comparator (342), said comparator (342) having a first input terminal electrically connected to an external power source for electric current input, a second input terminal and an output terminal (345), a magnetic sensing circuit (343) electrically connected to the second input terminal of said comparator (342) and disposed in the moving path of said magnets (231) and adapted for sensing movement of said magnets (231), a latch (344) electrically connected to the output terminal (345) of said comparator (342), and an output interface electrically connecting said latch (344) to said microprocessor (31) for transmitting a signal from said latch (344) to said microprocessor (31).

Para. 14. The control device of Para 13, wherein said magnetic sensing circuit (343) is a MR (magneto-resistive) sensor; said magnets (231) have the poles thereof aimed at an outer side of said magnetic sensing circuit (343).

Para. 15. The control device of Para 13, wherein said magnetic sensing circuit (343) is a Hall IC; said magnets have the poles thereof aimed at the center of said Hall IC.

## Claims

1. A control device for use in a cursor positing device, said control device comprising:
a housing defining an accommodation chamber and including a hollow groove connecting said accommodation chamber and exterior of said housing;
a control module positioned on the housing and a portion of said control module exposed to said hollow groove, wherein said control module comprises a movable member;
a sensing module comprising a left-side sensing module and a right-side sensing module; and
a circuit module positioned within said accommodation chamber and comprising a detecting module facing said movable member and a microprocessor electrically coupled with said detecting module;
wherein said left-side sensing module generates a first sensing signal in response to a first displacement variance in case of said first displacement variance achieved by moving said movable member left in a major axis direction and transmits said first sensing signal to said microprocessor, and said right-side sensing module generates a second sensing signal in response to a second displacement variance in case of said second displacement variance achieved by moving said movable member right in said major axis direction and transmits said second sensing signal.

2. The control device as claimed in claim 1, wherein said control module further comprises a carrier frame accommodated in said hollow grooves and partially extended inside said accommodation chamber, and said carrier frame comprises:
a movable member groove located at one side of said carrier frame away from said accommodation chamber and adapted for accommodating the movable member; and
a through hole beside said carrier frame connecting said movable member groove to said accommodation chamber and exposing said detecting module, and wherein said detecting module is configured to detect a continuous variance generated either by rotation of said movable member or by movement of said movable member in said major axis direction, or both rotation and movement of said movable member, where said detecting module is located outside said movable member groove.

3. The control device as claimed in claim 2,
wherein said control module further comprise balance bar with one end pivoted onto said housing and another end extended into said accommodation chamber to load against said carrier frame, and said carrier frame further comprises a plurality of elastic members at the other side of said carrier frame; or
wherein said carrier frame further comprises at least one press portion protruded located at the other side thereof, and said circuit module further comprises a control switch electrically coupled with said microprocessor to be against said press portion when a force is applied in downward direction on said carrier frame to make said press portion touch with said control switch.

4. The control device as claimed in claim 1,
wherein said circuit module further comprises a connecting interface electrically connected to said microprocessor and electrically connectable to a communication port of an external computer, said connecting interface being selected from the group of USB and PS2; or
wherein said sensing module comprises a comparator with a first and a second inputs and an output terminal, and wherein said first input terminal is electrically coupled to an external power source for an electric current input, and said second input terminal is electrically coupled to a sensing circuit in the moving path of said movable member, and said output terminal is electrically coupled to a latch and said latch is further electrically coupled to an output interface for transmitting signal from said latch to said microprocessor; or
wherein said movable member is made in one of the shapes of a cylindrical bar, an oval bar, a rectangular bar and a pentagonal bar; or
wherein said sensing module further comprises a plurality of horizontal-moving sensing modules along with said major axis direction to sense continuous variance of horizontal movement achieved by movement of said movable member in said major axis direction and generate a third sensing signal transmitted to said microprocessor, and said first and second sensing signals are configured respectively to reset said cursor to a first and a second reset points; or
wherein said sensing module further comprises a plurality of vertical-moving sensing modules around said movable member to sense continuous variance of rotation achieved by rotation of said movable member and generate a fourth sensing signal transmitted to said microprocessor.

5. The control device as claimed in claim 1,
wherein said housing further comprises two receiving grooves respectively at left and right sides of said hollow groove to connect to said accommodation chamber, and said control module further comprises a carrier frame under said hollow groove and within said accommodation chamber, and said movable member which is located in said hollow groove and upon said carrier frame comprises left and right ends respectively accommodated inside left and right sides of said receiving grooves, and said movable member comprises a through hole and a sleeve covering said through hole and surrounding around said movable member and said carrier frame, and said detecting module located on said carrier frame is configured to detect at least one of linear movement and rotation motion; or
wherein said left-side sensing module comprises a left optical transmitter and a left optical receiver, and said right-side sensing module comprises a right optical transmitter and a right optical receiver, and when achieving said first displacement variance, a portion of said movable member intervenes between said left optical transmitter and a left optical receiver to generate said first sensing signal, and when achieving said second displacement variance, a portion of said movable member intervenes between said right optical transmitter and said right optical receiver to generate said second sensing signal, and said first and second sensing signals are configured respectively to reset said cursor to a first and a second reset points; or
wherein said left-side sensing module comprises a left optical transmitter and a left optical receiver, and said right-side sensing module comprises a right optical transmitter and a right optical receiver, and when achieving said first displacement variance by moving said movable member toward left in said major axis direction, a portion of said movable member intervenes between said left optical transmitter and a left optical receiver to generate said first sensing signal in response to preventing said left optical transmitter from said left optical receiver by said portion of said movable member, and when achieving said second displacement variance by moving said movable member toward right in said major axis direction, a portion of said movable member intervenes between said right optical transmitter and said right optical receiver to generate said second sensing signal in response to preventing said right optical transmitter from said right optical receiver by said portion of said movable member, and said first and second sensing signals are configured respectively to reset said cursor to a first and a second reset points.

6. The control device as claimed in claim 1, wherein
said left-side sensing module comprises a left magnet and a left magnetic sensing module correspondingly positioned each other, and
said right-side sensing module comprises a right magnet and a right magnetic sensing module correspondingly positioned each other, and
said left and right magnets are mounted to interior or exterior sides of said movable member by one of the fastening techniques of adhesion, snap means and welding or molded together by insert molding.

7. The control device as claimed in claim 6, wherein said movable member comprises two magnet holders respectively located on the two distal ends thereof to hold said left and right magnets, respectively.

8. The control device as claimed in claim 1, wherein said left-side sensing module comprises a left magnet and a left magnetic sensing module correspondingly positioned each other, and said right-side sensing module comprises a right magnet and a right magnetic sensing module correspondingly positioned each other.

9. The control device as claimed in claim 8, wherein
said left and right magnets are positioned respectively at distal ends of said movable member, and said left and right magnetic sensing modules are positioned respectively near two sides of said movable member, or
said left and right magnetic sensing modules are positioned respectively at said distal ends of said movable member, and said left and right magnets are positioned respectively near said two sides of said movable member.

10. The control device as claimed in claim 8, wherein said control module further comprises a cover shell, a left push holder and a right push holder positioned respectively at two distal ends of said cover shell, and a sleeve as said movable member movably wearing on said cover shell, and wherein said detecting module is positioned on said cover shell and detects rotation and sliding of said sleeve.

11. The control device as claimed in claim 10, wherein
said left and right magnets are mounted respectively to said left and right push holders, and said left and right magnetic sensing modules are positioned on said circuit module respectively close to said left and right magnets, or
said left and right magnetic sensing modules are mounted respectively to said left and right push holders, and said left and right magnets are positioned on said circuit module respectively close to said left and right magnetic sensing modules.

12. The control device as claimed in claim 11,
wherein said left and right magnetic sensing modules comprise MR (magneto-resistive) sensors, and said MR sensors measure said first and second displacement variances of said movable member by sensing by way of no-touch the change of the strength of the magnetic field generated by said left and right magnets, and said first and second sensing signals are configured respectively to reset said cursor to a first and a second reset points; or
wherein said left and right magnetic sensing modules comprise Hall integrated circuits facing respectively right magnetic poles of said left and right magnets, and said Hall integrated circuits measure said first and second displacement variances of said movable member by sensing by way of no-touch the change of the strength of the magnetic field generated by said left and right magnets, and said first and second sensing signals are configured respectively to reset said cursor to a first and a second reset points.

13. The control device as claimed in claim 9,
wherein said left and right magnetic sensing modules comprise MR (magneto-resistive) sensors, and said MR sensors measure said first and second displacement variances of said movable member by sensing by way of no-touch the change of the strength of the magnetic field generated by said left and right magnets, and said first and second sensing signals are configured respectively to reset said cursor to a first and a second reset points; or
wherein said left and right magnetic sensing modules comprise Hall integrated circuits facing respectively right magnetic poles of said left and right magnets, and said Hall integrated circuits measure said first and second displacement variances of said movable member by sensing by way of no-touch the change of the strength of the magnetic field generated by said left and right magnets, and said first and second sensing signals are configured respectively to reset said cursor to a first and a second reset points.

14. The control device as claimed in claim 1, wherein said control module further comprises a cover shell, a left push holder and a right push holder positioned respectively at two distal ends of said cover shell, and a sleeve as said movable member movably wearing on said cover shell, and wherein said detecting module is positioned on said cover shell and detects rotation and sliding of said sleeve.

15. The control device as claimed in claim 14, wherein
said left-side sensing module comprises a left optical transmitter and a left optical receiver, and said right-side sensing module comprises a right optical transmitter and a right optical receiver, and
when achieving said first displacement variance by moving said movable member toward left in said major axis direction, a portion of said movable member intervenes between said left optical transmitter and a left optical receiver to generate said first sensing signal in response to preventing said left optical transmitter from said left optical receiver by said portion of said movable member, and
when achieving said second displacement variance by moving said movable member toward right in said major axis direction, a portion of said movable member intervenes between said right optical transmitter and said right optical receiver to generate said second sensing signal in response to preventing said right optical transmitter from said right optical receiver by said portion of said movable member, and said first and second sensing signals are configured respectively to reset said cursor to a first and a second reset points.

16. A control device for use in a cursor positing device, said control device comprising:
a housing defining an accommodation chamber;
a control module positioned on the housing, wherein said control module comprises a movable member;
a sensing module; and
a circuit module positioned within said accommodation chamber and comprising a microprocessor electrically coupled with said sensing module;
wherein said sensing module generates a first sensing signal in response to a first displacement variance in case of said first displacement variance achieved by moving said movable member in a major axis direction and transmits said first sensing signal to said microprocessor to reset said cursor to a first reset point.

17. The control device as claimed in claim 16,
wherein said sensing module comprises a magnetic sensing module electrically coupled to said circuit module and a magnet positioned at one of sides of said control module, and said magnetic sensing module is a magneto-resistive sensor (MR sensor) to measure said first displacement variance of said movable member by sensing by way of no-touch the change of the strength of the magnetic field generated by said magnet; or
wherein said sensing module comprises a magnetic sensing module electrically coupled to said circuit module and a magnet positioned at one of sides at least of said control module, and said magnetic sensing module is a Hall IC faced right a pole of said magnet to measure said first displacement variance of said movable member by sensing by way of no-touch the change of the strength of the magnetic field generated by said magnet; or
wherein said sensing module further comprises a plurality of horizontal-moving sensing modules along with said major axis direction and a plurality of vertical-moving sensing modules around said movable member, and wherein said horizontal-moving sensing modules sense by way of no-touch a continuous variance of horizontal movement achieved by movement of said movable member and generate a third sensing signal transmitted to said microprocessor, and said wherein said vertical-moving sensing modules sense by way of no-touch a continuous variance of rotation achieved by rotation of said movable member and generate a fourth sensing signal transmitted to said microprocessor.

18. The control device as claimed in claim 16, wherein said sensing module comprises an optical transmitter and an optical receiver both which are positioned at one of sides at least of said control module, when achieving said first displacement variance by moving said movable member in said major axis direction, a portion of said movable member intervenes between said optical transmitter and said optical receiver to prevent said optical receiver from said optical transmitter, and said optical transmitter generates a first sensing signal by way of no-touch in response to block between said optical receiver and said optical transmitter.

19. The control device as claimed in claim 18, wherein said sensing module further comprises a plurality of horizontal-moving sensing modules along with said major axis direction and a plurality of vertical-moving sensing modules around said movable member, and wherein said horizontal-moving sensing modules sense by way of no-touch a continuous variance of horizontal movement achieved by movement of said movable member and generate a third sensing signal transmitted to said microprocessor, and said wherein said vertical-moving sensing modules sense by way of no-touch a continuous variance of rotation achieved by rotation of said movable member and generate a fourth sensing signal transmitted to said microprocessor.

20. The control device as claimed in claim 16, wherein said housing further comprises a hollow groove to expose to a portion of said control module on said housing, or said circuit module further comprises a detecting module facing said movable member and electrically coupling with said microprocessor.

21. The control device as claimed in claim 20, wherein said detecting module detects both continuous variance of rotation achieved by rotating said movable member and continuous variance of movement achieved by moving said movable member toward a horizontal direction in said major axis direction, or detects continuous variance of either rotation achieved by rotating said movable member or movement achieved by moving said movable member toward said horizontal direction in said major axis direction.

22. A control device for use in a cursor positing device, said control device comprising:
a housing defining an accommodation chamber;
a control module positioned on the housing, wherein said control module comprises a movable member;
a sensing module; and
a circuit module positioned within said accommodation chamber and comprising a microprocessor electrically coupled with said sensing module;
wherein said sensing module generates a first sensing signal in response to a first displacement variance in case of said first displacement variance achieved by moving said movable member in a major axis direction and transmits said first sensing signal to said microprocessor.

23. The control device as claimed in claim 22,
wherein said movable member comprises a movable sleeve; or
wherein said major axis is a horizontal axis; or
wherein said first sensing signal is configured to reset said cursor to a first reset point; or
wherein said first sensing signal is indicative of a direction and amount of movement of said movable member relative to said housing; or
wherein said control device further comprises a detecting module facing said movable member and electrically coupling with said microprocessor.
